# EUROPEAN PATENT SPECIFICATION

(11) **EP 1 553 789 B1**
(45) Date of publication and mention of the grant of the patent: **03.05.2017**
(21) Application number: 04106672.1
(22) Date of filing: 17.12.2004
(51) Int. Cl.: H04B 7/10, H04B 7/185, H04W 16/28, H04W 64/00, H04W 84/04, G01S 5/02, H01Q 1/24

(54) **DATA TRANSMISSION AT SEA**
DATENÜBERTRAGUNG AUF DEM MEER
TRANSFERT DES DONNÉES EN MER

(30) Priority: 23.12.2003 FI 20031900
(43) Date of publication of application: 13.07.2005
(73) Proprietor: TeliaSonera Finland Oyj, 00510 Helsinki (FI)
(72) Inventor: Mattila, Pekka, 04320, Tuusula (FI)
(74) Representative: Kolster Oy Ab

(56) References cited:
- EP-A2- 1 282 327
- EP-A2- 1 369 954
- WO-A2-02/41652
- WO-A2-98/16077
- WO-A2-98/59433
- DE-A1- 10 004 000

## Description

### FIELD OF THE INVENTION

The present invention relates to wireless data transmission and more particularly to transmission between a fixed network and a moving vessel such as a ship.

### BACKGROUND OF THE INVENTION

Fast access to network services, such as access to the Internet, has become more and more desirable today both at work and leisure time. Broadband systems use transmission channels that are capable of supporting data rates greater than primary rates. A broad frequency band allows a data transmission capacity of the order of 2 Mbit/s or more. The broadband technology enables its users to gain access to high-speed digital technologies such as integrated access to voice, high-speed data transmission, video conference and video-on-demand services.

Fast access to various network services may be desired even when traveling by sea. Shipping companies may wish to offer their passengers or employees such services, and thus they may provide the vessel with an Intranet system such as a WLAN (Wireless local area network) system. However, instead of the WLAN of the ship, the people onboard are more likely to be interested in gaining access to outside, on-shore networks, such as to the Internet. Access from a ship to on-shore networks is possible with satellite technology. The satellite technologies utilize existing systems, such as television satellite systems, for the data transmission.

One of the problems associated with the above arrangement is the limited capacity of the satellite technology. There are other systems using the satellite transmission capacity, such as the television, and only a minor part of the bandwidth can be reserved for the transmission to the ships. Thus TV companies may require high rental fees for utilizing their satellite capacity. The direction of the satellite antennas on the ship causes problems since the position of the ship changes constantly. The ship body may also generate reflections and shadow zones where the satellite signal cannot be reached.

WO 98/16077 A2 discloses a system that employs directive antenna arrays and the information on the position of the users to form narrow antenna beams to and from desired users and away from undesired users to reduce cochannel interference.

### BRIEF DESCRIPTION OF THE INVENTION

An object of the present solution is thus to provide a method and an apparatus for implementing the method so as to overcome the above problems. The objects of the application are achieved by a method and systems which are characterized by what is stated in the independent claims 1, 8 and 13. Any occurrence of the term 'embodiment' in the description has to be considered as an 'aspect of the invention', the invention being defined by the appended claims.

The solution of the present application is based on the idea of providing a ship on the sea an access to on-shore telecommunications network services by means of a microwave radio link. According to the solution, a wireless connection between the ship and the on-shore network is established using a microwave link between a telecommunications system of the ship and a base station of the on-shore network.

In an embodiment of the solution, the appropriate direction for the data transmission from the ship to the base station is calculated utilizing the momentary location of the ship and the location of the base station in question. The swaying angle of the ship is compensated by means of a gyroscope. For the redundancy and/or handover purposes, the ship is provided with dual antennas such that at each time a first antenna is selected as an active antenna and a second as a standby antenna. The antenna receiving a stronger threshold signal from the base station is usually selected as the active antenna. When the ship is approaching a new base station the standby antenna begins to search for the next base station. A handover may be performed when the threshold signal of the new base station is stronger than that of the original base station. A first antenna is used for signalling and/or data transmission between the ship and the first base station while a second antenna is redirected towards the second base station, and a second antenna is used for signalling and/or data transmission between the ship and the second base station while the first antenna is redirected towards the second base station.

An advantage of the present solution is that it provides a feasible alternative for broadband data transmission between a ship and an on-shore network. By means of the present solution, a high data transmission rate can be maintained since a significant portion of the frequency bandwidth can be used for the actual data transmission, and only a minor part of the frequency bandwidth has to be reserved for signalling. The solution enables transmission of packet switched data as well as circuit switched data.

### BRIEF DESCRIPTION OF THE DRAWINGS

In the following the invention will be described in greater detail by means of preferred embodiments with reference to the accompanying drawings, in which
Figure 1 illustrates the telecommunication system according to the present solution;
Figure 2a) illustrates the direction of the data transmission according to the present solution;
Figure 2b) illustrates the direction of the data transmission according to the present solution;
Figure 2c) illustrates the direction of the data transmission according to the present solution;
Figure 2d) illustrates the direction of the data transmission according to the present solution;
Figure 2e) illustrates the direction of the data transmission according to the present solution;
Figure 2f) illustrates the direction of the data transmission according to the present solution;
Figure 3) illustrates the coverage areas of the antennas according to the present solution.

### DETAILED DESCRIPTION OF THE INVENTION

In the following, embodiments of the present solution will be described with reference to a mobile communications system, such as UMTS. (Universal mobile telecommunications system). This solution is not, however, meant to be restricted to these embodiments. The solution may be applied in any wireless communications system providing data transmission services. Such systems include, for instance, systems based on GSM (Global system for mobile communication) or corresponding systems, such as GSM2+ systems and the future 4^{th} generation systems. The specifications of the wireless communications systems advance rapidly. This may require additional changes to the solution. For this reason, the terminology and the expressions used should be interpreted in their broadest sense since they are meant to illustrate the solution and not to restrict it. The relevant inventive aspect is the functionality concerned, not the network element or equipment where it is executed.

Microwave radio is a transmission technique that involves fixed, accurately directed radio links with operating frequencies of about 7 to 38 GHz. The microwave radio technique allows a data transmission capacity of 2 to 2 x 17 Mbit/s, depending on the available bandwidth. The link comprises a signalling channel and a data transmission channel. The applications are of the microwave radio are, for example, in radio links between a base station and a radio network controller, in docking of satellites, and in missile systems.

A gyroscope device is based on an electrically rotated wheel at high speed in a low-friction bearing. When the device is moved in different directions the gyroscope will still point in the original direction. This is because any alteration of the inclination of the rotation axis is resisted by a turning movement (gyrostatic moment). This can be measured and the results can be used in ship stabilization, inertial measuring and navigation systems etc.

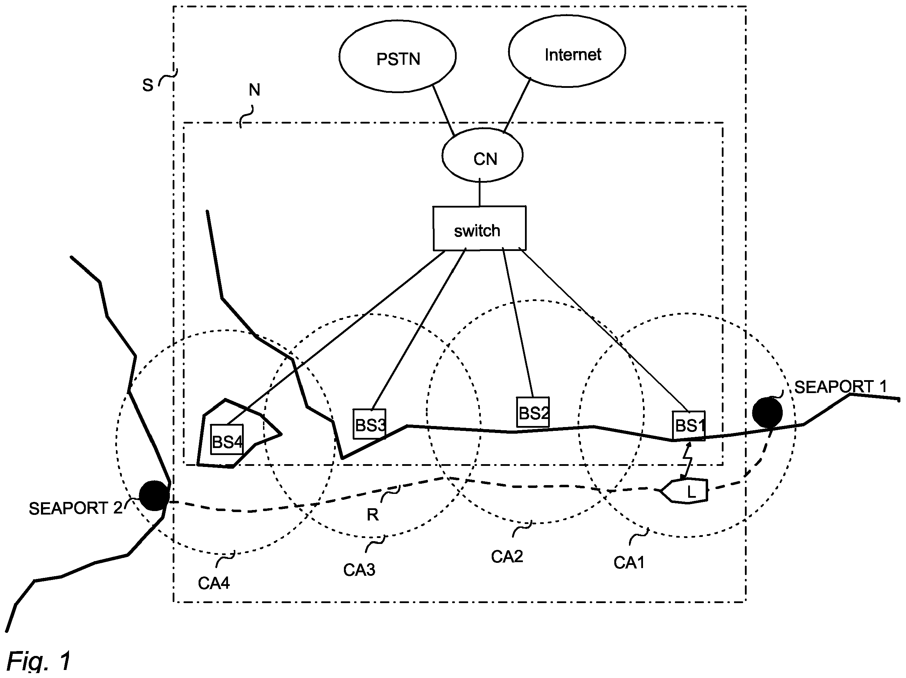

Referring to Figure 1, the telecommunication system S according to the present solution comprises an on-shore telecommunications network N. The network N may be a mobile network comprising a core network CN, and at least one fixed base station BS1, BS2, BS3, BS4 for connecting the mobile terminals into the core network. The core network CN may further comprise network elements (not shown) such as a mobile switching centre (MSC), a serving GPRS support node (SGSN) and a gateway GPRS support node (GGSN). The core network described herein is based on a 3G UMTS network. Other types of core networks, for example the GSM, may comprise other network elements. The base stations BS1, BS2, BS3, BS4 are connected to the core network CN via a switch. The switch may comprise a radio network controller (RNC) or the like for controlling the radio resources of the network N. The base stations BS1, BS2, BS3, BS4 may be located on the shore and/or on an island or islet or the like. The coverage areas of the base stations BS1, BS2, BS3, BS4 are illustrated here by circles CA1, CA2, CA3, CA4 respectively. However, they could also of other shapes, such as ellipses or conical shapes. The core network CN is connected to an outside network, such as the Internet and/or the Publicly switched telephone network PSTN in order to provide the mobile subscribers access to these networks. The telecommunications system of the present solution further comprises an Intranet or an equivalent network (not shown) on the ship L. It may be implemented using WLAN (Wireless local area network) or Bluetooth technology, for example.

In Figure 1, a situation is shown where the ship L is sailing on the sea and located on the coverage area CA1 of BS1. The ship L is moving towards the coverage area CA2 of BS2. According to the present solution, inside the coverage area, the ship L and the base station are able to establish a wire-less microwave radio link between each other, as illustrated by an arrow. The ship route R comprises a journey from seaport 1 to seaport 2. In reality, there may be other than two seaports on the route R. The water area in question does not necessarily have to be a sea; it may also be a lake or a river, for example. There may also be other than four base stations by the route. The whole route is not necessarily covered by base stations; only a part of it may be covered. At an area not covered by base stations the microwave link is disconnected in which case it may be re-established if the ship again reaches a coverage area of a base station. According to the present solution CN comprises a central computer unit for storing information of the route of the ship.

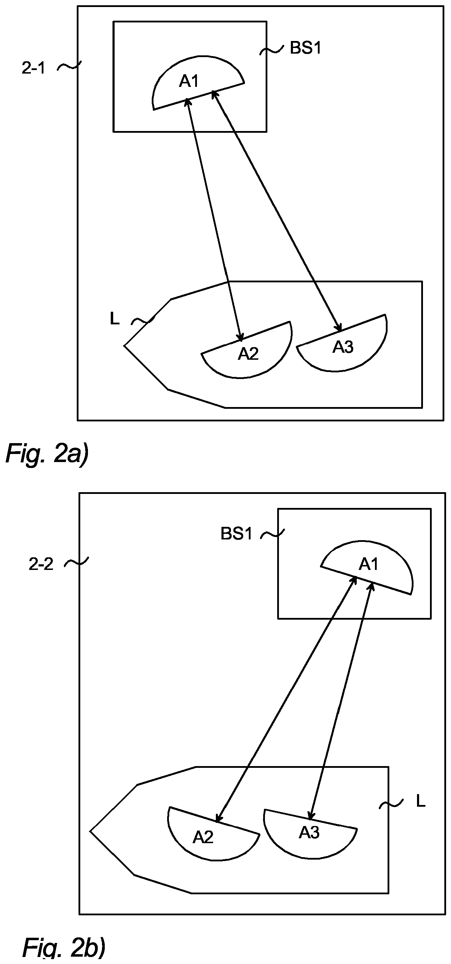

Referring to Figure 2a), stage 2-1, a situation is shown where a base station BS1 and a ship L, located on the coverage area of BS1, have established a wireless data connection with each other by means of a microwave radio link using antennas A1, A2, A3. In the situation of Figure 2a), there is one antenna A1 in the base station BS1 and two antennas A2, A3 on the ship L capable of receiving and transmitting broadband data using a microwave link. There may also be other than one antenna in the base station and/or two antennas on the ship. A2 and A3 are currently directed towards BS1 for transmitting/receiving data to/from BS1. According to an embodiment of the present solution, a dual polarization microwave link is utilized such that the link between L and BS1 is implemented as two microwave beams (as indicated by arrows), which have equal frequency magnitudes but different polarizations, meaning that data may be transmitted using a vertically or a horizontally polarized microwave. The vertically polarized wave is used between A1 and A2, and the horizontally polarized wave is used between A1 and A3, or wise versa. One of the waves is selected as an active wave and the other as a standby wave. The signalling and data transmission occurs using the active wave.

Referring to Figure 2b), stage 2-2, as the ship moves, the direction of the antenna beams of A2 and A3 is updated and A2 and A3 are redirected towards the base station. The redirection of the antennas of the ship is based on the current location of the ship, compensating of the swaying of the ship, and the location of the base station BS1. The ship receives updated information of its own location from the GPS system or from the steering system of the ship. Information of the location of the base stations by the route of the ship is maintained on the ship. The turning of the antennas is carried out, for example, by means of an azimuth motor. The weather, waves etc. may cause vertical and/or horizontal swaying of the ship. According to the present solution, the ship L is provided with sensors for measuring the swaying angle of the ship. The swaying of the ship is compensated by means of a gyroscope system. The gyroscope of the ship receives updated information of the swaying angle from the sensors and it adjusts the direction of the antennas A2, A3 so that the microwave connection between the ship and the base station can be maintained.

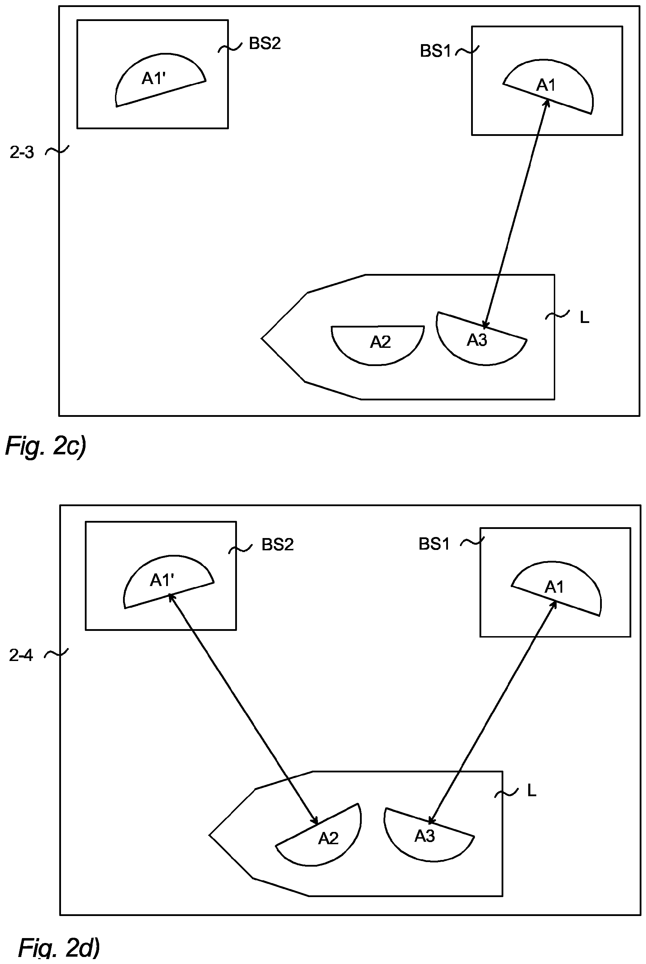

Transmitting of automatic gain control (AGC) signals is a feature of the microwave radio, which allows the receiver of the signals to evaluate and follow the voltage level of the received signals. Thus it is possible to determine whether the ship and the base station are close enough to each other to start data transmission using a microwave link. The antennas of the ship are able to choose for the data transmission the base station, which has the highest voltage level of an AGC signal received in the antenna. The selecting of which is the active signal and which is the standby signal of the dual polarization link is based on the measurement of the AGC signal strength such that the received signal having the higher voltage level of the AGC signal is selected as the active one. Referring to Figure 2c), stage 2-3, a situation is shown where the ship is about to leave the coverage area of BS1, and the voltage level of the AGC signals received by A2 from BS1 has decreased under a predetermined threshold value. As this point A2 begins to search for the AGC signal of the next base station BS2, and thus, by means of the azimuth motor, A2 is turned towards BS2 (comprising an antenna A1'). The redirection of A2 towards BS2 is based on the current location of the ship and the location information of BS2. During the turning of A2, the link between A1 and A3 is the active link. BS2 is already waiting for the approaching ship L and searching for the AGC signal of the ship L, based on the information of the route of the ship received from the central computer unit.

Referring to Figure 2d), stage 2-4, a situation is shown where A2 has received the AGC signal of the next base station BS2. A2 is directed towards BS2, but A3 is still directed towards BS1. The direction of A2 towards BS2 is based on the current location of the ship, compensating of the swaying of the ship, and the location of BS2. Transmission is possible between A3 and A1, and between A2 and A1'. The two links have different polarizations, and the link having the higher AGC signal strength received on the ship is selected as the active link.

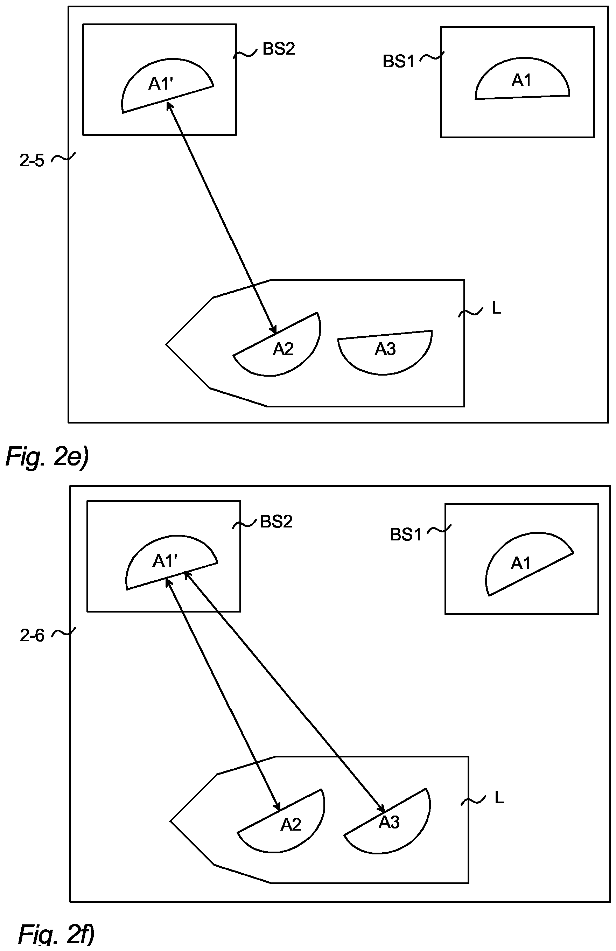

Referring to Figure 2e), stage 2-5, a situation is shown where the ship L has moved further, and the voltage level of the AGC signal from BS1 received in A3 has declined under a predetermined value. Transmission between the ship L and BS1 is interrupted, and A3 is turning towards BS2. A3 is searching for the AGC signal of BS2. The redirection of A3 towards BS2 is based on the current location of the ship and the location of BS2. The link between A1' and A2 is the active link. BS1 may be getting ready for the next ship.

Referring to Figure 2f), stage 2-6, a situation is shown where transmission between the A2 and A1', and between A3 and A1' is possible. One of the links is the active link, based on the AGC signal strength. The direction of the antennas A2 and A3 is based on the current location of the ship, compensating of the swaying of the ship, and the location of the base station BS2. The transmission process continues in a manner described above with reference to Figures 2a) to 2f).

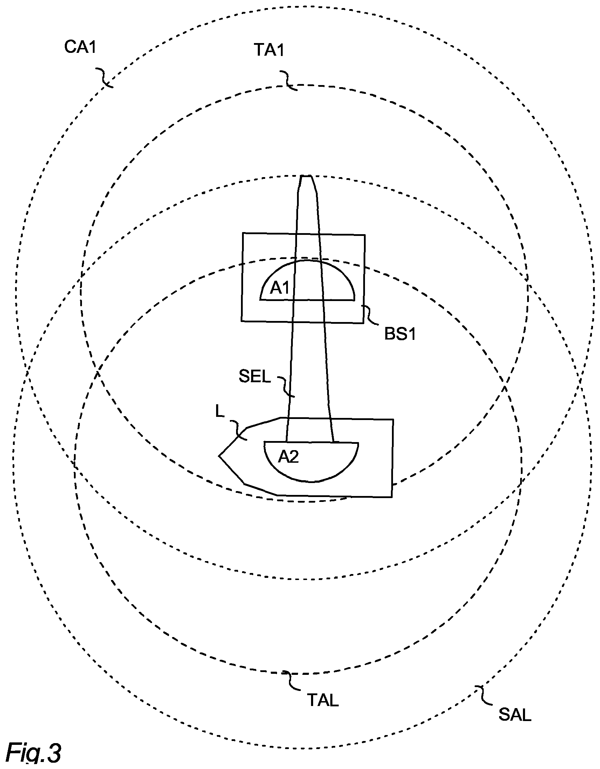

Figure 3 illustrates the coverage area CA1 of the base station BA1 and the search area SAL of the antenna A2 of the ship L. For reasons of clarity only of the ship antennas is shown. Inside a "threshold area" TA1, the strength of the AGC signal of A1 is above the predetermined threshold value. Respectively, inside a "threshold area" TAL, the strength of the AGC signal of A2 is above the predetermined threshold value. In this case CA1, SAL, TA1 and TAL comprise a circle but they could as well be of some other form. The antenna A2 of the ship L comprises an adjustable parabolic antenna capable of transmitting a focused microwave beam ML inside the search area CAL circle. A2 can be redirected in vertical and/or horizontal direction as the ship moves. The redundancy antenna, A3 in Figures 2a) - 2f), of the ship may be used if there is an obstacle (such as another ship) between A1 and A2 and/or if the received AGC signal strength in A2 drops under a predetermined value. The antenna beam of A1 is not focused, and it is directed based on the GPS location of the ship. The antenna beam of the ship may be adjusted in horizontal direction.

According to an embodiment of the present solution the ship and or the base station are provided with a subantenna for transmitting and/or receiving of AGC signals.

The maximum distance, at which a ship is able to receive/transmit data according to the present solution, depends, for example, on the capability of the antennas of the ship and of the base station. According to another embodiment, the maximum distance is preferably about 40 to 50 km.

According to yet another embodiment, the solution of the present application enables data transmission to/from the ship even if the route of the ship comprises territorial waters of a foreign country. This may be implemented so that the nationality of the ship is declared as changed when the roaming begins, and the original nationality is returned when the roaming ends.

According to yet another embodiment, the data transmission between the ship and the on-shore network is based on a contract between the respective shipping company and network operator.

According to yet another embodiment, instead of a ship, the system of the present application is utilized in some other vessel, such as a train or a bus.

The base station of the present solution may be a conventional UMTS or GSM base station, provided with a computer unit and the antenna for performing functions of the present solution. The computer unit of the base station receives information of an approaching ship from a central computer in the CN. When the base station has received the information of the approaching ship from the central computer unit it receives information of the actual location of the ship from the GPS system. The base station may transmit the information of the actual location of the ship to the central computer unit so that the central computer may store the information and/or inform other base stations of the location of the ship. Based on the GPS information the base station searches for the AGC signal of the ship and may establish a microwave link with a ship antenna having the strongest AGC signal.

Constructions of the system, such as the antennas, protective devices and fastening constructions, can be planned so that they tolerate different weather conditions, such as wind, snow, ice, and various operation temperatures, for example, temperatures from -33 to +40 °C.

In addition to prior art devices, the system implementing the operation according to the present solution are configured to store the route of the ship and the location information of the base stations. The existing networks, network nodes and base stations comprise processors and memory, which can be used in the functions according to the solution. Changes needed to implement the present solution may be carried out by means of software routines that can be added or updated and/or routines contained in application specific integrated circuits (ASIC) and/or programmable circuits, such as an electrically programmable logic device EPLD or a field programmable gate array FPGA.

It will be obvious to a person skilled in the art that, as the technology advances, the inventive concept can be implemented in various ways. The invention and its embodiments are not limited to the examples described above but may vary within the scope of the claims.

## Claims

1. A method for providing a ship (L) access to on-land telecommunications services of an on-land telecommunications network (N), said on-land telecommunications network (N) comprising at least two base stations (BS1, BS2, BS3, BS4), the method comprising
providing said access by using a microwave radio link between the ship (L) and a first base station (BS1) or a second base station (BS2),
**characterized by** utilizing at least two antennas on the ship (L) for maintaining a microwave radio link, wherein a handover is performed when a threshold signal of the second base station (BS2) is stronger than that of the first base station (BS1), wherein
a first antenna (A3) is used for signalling and/or data transmission between the ship (L) and the first base station (BS1) while a second antenna (A2) is redirected towards the second base station (BS2); and
a second antenna (A2) is used for signalling and/or data transmission between the ship (L) and the second base station (BS2) while the first antenna (A3) is redirected towards the second base station (BS2).

2. The method according to claim 1, **characterized by** determining of the direction for the data transmission between the ship (L) and the base station (BS1, BS2, BS3, BS4) by means of location information of the base station, location information of the ship and information of the angular position of the ship.

3. The method according to claims 1 or 2, **characterized by** receiving the location information of the ship from the Global positioning system GPS.

4. The method according to claims 1, 2 or 3, **characterized by** said link comprising two beams having frequencies of same magnitudes but different polarizations, wherein one of the beams is the active beam that is used for signalling and/or data transmission.

5. The method according to any of the preceding claims 1 to 4, **characterized by** updating on the ship the direction for the data transmission by means of a gyroscope device.

6. The method according to any of the preceding claims 1 to 5, **characterized by**
measuring a threshold signal strength related to the microwave radio link; and
selecting as the active beam the beam having the highest threshold signal strength.

7. The method according to any of the preceding claims 1 to 6, **characterized by** searching (2-3) on the ship (L), if the threshold signal strength of the first base station (BS1) goes under a predetermined value, for a signal of the second base station (BS2).

8. A telecommunications system comprising
a telecommunications network on a ship (L), and
an on-land telecommunications network (N) comprising at least two base stations (BS1, BS2, BS3, BS4) connected to the on-land telecommunications network (N),
wherein the system is configured to utilize a microwave radio link for providing a wireless data connection between the telecommunications network on the ship (L) and a first base station (BS1) or a second base station (BS2),
**characterized in that** the system comprises at least two antennas on the ship (L), wherein the system is configured to perform a handover when a threshold signal of the second base station (BS2) is stronger than that of the first base station (BS1), wherein, for maintaining a microwave radio link, the system is configured to
use a first antenna (A3) for signalling and/or data transmission between the ship (L) and the first base station (BS1) while a second antenna (A2) is redirected towards the second base station (BS2); and
use a second antenna (A2) for signalling and/or data transmission between the ship (L) and the second base station (BS2) while the first antenna (A3) is redirected towards the second base station (BS2).

9. The telecommunications system according to claim 8, **characterized in that** it is configured to determine the direction for the data transmission between the telecommunications network on the ship (L) and the base station (BS1, BS2, BS3, BS4) by means of location information of the base station, location information of the ship and information of the angular position of the ship.

10. The telecommunications system according to claim 8 or 9, **characterized in that** it is configured to receive the location information of the ship from the Global positioning system GPS.

11. The telecommunications system according to claim 8, 9 or 10, **characterized in that** it is configured to update the direction for the data transmission by means of a gyroscope device.

12. The system according to any of the preceding claims 8 to 10, **characterized in that** it is configured to provide for the ship (L) a broad frequency band data connection to the Internet, the broad frequency band data connection allowing a data transmission capacity of at least 2 Mbit/s.

13. A telecommunications system comprising a first base station of an on-land telecommunications network (N), wherein the first base station is arranged to establish a microwave radio link with a telecommunications network of the ship (L) for providing the ship (L) a wireless data connection to the on-land telecommunications network (N),
**characterized in that** the first base station (BS1) is configured to connect with at least two antennas on the ship (L), wherein a handover is performed when a threshold signal of a second base station (BS2) is stronger than that of the first station (BS1), wherein, for maintaining a microwave radio link, the first base station (BS1) is configured to use a first antenna (A3) of said antennas for signalling and/or data transmission between the ship (L) and the first base station (BS1) while a second antenna (A2) of said antennas is redirected towards the second base station (BS2).

14. The base station according to claim 13, **characterized in that** it is arranged to determine the direction for the data transmission between the ship (L) and the first base station (BS1, BS2, BS3, BS4) by means of location information of the first base station and location information of the ship (L).

15. The first base station according to claim 13 or 14, **characterized in that** it is arranged to receive the location information of the ship (L) from the Global positioning system GPS.

16. The first base station according to claim 13, 14 or 15, **characterized in that** it is arranged to
measure a threshold signal strength related to the microwave radio link, wherein the microwave link comprises two beams with different polarizations; and
select as the active beam the beam having the highest threshold signal strength.

## Patentansprüche

1. Verfahren zum Bereitstellen eines Zugriffs zu landgestützten Telekommunikationsdiensten eines landgestützten Telekommunikationsnetzwerks (N) an ein Schiff (L), wobei das landgestützte Telekommunikationsnetzwerk (N) zumindest zwei Basisstationen (BS1, BS2, BS3, BS4) aufweist, wobei das Verfahren aufweist
- Bereitstellen des Zugriffs durch Verwenden einer Mikrowellenfunkverbindung zwischen dem Schiff (L) und einer ersten Basisstation (BS1) oder einer zweiten Basisstation (BS2),
- **gekennzeichnet durch** Nutzen von zumindest zwei Antennen auf dem Schiff (L) zum Unterhalten einer Mikrowellenfunkverbindung, wobei eine Übergabe durchgeführt wird, wenn ein Schwellensignal der zweiten Basisstation (BS2) stärker als das der ersten Basisstation (BS1) ist, wobei
- eine erste Antenne (A3) zur Signalgebung und/oder Datenübertragung zwischen dem Schiff (L) und der ersten Basisstation (BS1) verwendet wird, während eine zweite Antenne (A2) zu der zweiten Basisstation (BS2) umgelenkt wird; und
- eine zweite Antenne (A2) zur Signalgebung und/oder Datenübertragung zwischen dem Schiff (L) und der zweiten Basisstation (BS2) verwendet wird, während die erste Antenne (A3) zu der zweiten Basisstation (BS2) umgelenkt wird.

2. Verfahren gemäß Anspruch 1, **gekennzeichnet durch** Bestimmen der Richtung für die Datenübertragung zwischen dem Schiff (L) und der Basisstation (BS1, BS2, BS3, BS4) mittels einer Ortsinformation der Basisstation, einer Ortsinformation des Schiffes und einer Information der Winkelposition des Schiffes.

3. Verfahren gemäß Anspruch 1 oder 2, **gekennzeichnet durch** Empfangen der Ortsinformation des Schiffes von dem Globalen Positionsbestimmungssystem GPS.

4. Verfahren gemäß Ansprüchen 1, 2 oder 3, **dadurch gekennzeichnet, dass** die Verbindung zwei Strahlen mit Frequenzen derselben Größe aber unterschiedlicher Polarisierung aufweist, wobei einer der Strahlen der aktive Strahl ist, der zur Signalgebung und/oder Datenübertragung verwendet wird.

5. Verfahren gemäß einem der vorhergehenden Ansprüche 1 bis 4, **gekennzeichnet durch** Aktualisieren der Richtung für die Datenübertragung auf dem Schiff mittels einer Gyroskop-Vorrichtung.

6. Verfahren gemäß einem der vorhergehenden Ansprüche 1 bis 5, **gekennzeichnet durch**
- Messen einer auf die Mikrowellenfunkverbindung bezogenen Schwellensignalstärke; und
- Auswählen des Strahls mit der höchsten Schwellensignalstärke als den aktiven Strahl.

7. Verfahren gemäß einem der vorhergehenden Ansprüche 1 bis 6, **gekennzeichnet durch** Suchen (2-3) auf dem Schiff (L), ob die Schwellensignalstärke der ersten Basisstation (BS1) für ein Signal der zweiten Basisstation (BS2) unter einen vorbestimmten Wert sinkt.

8. Telekommunikationssystem, aufweisend
- ein Telekommunikationsnetzwerk auf einem Schiff (L), und
- ein landgestütztes Telekommunikationsnetzwerk (N), das zumindest zwei Basisstationen (BS1, BS2, BS3, BS4) aufweist, die mit dem landgestützten Telekommunikationsnetzwerk (N) verbunden sind,
- wobei das System ausgebildet ist, um eine Mikrowellenfunkverbindung zum Bereitstellen einer drahtlosen Datenverbindung zwischen dem Telekommunikationsnetzwerk auf dem Schiff (L) und einer ersten Basisstation (BS1) oder einer zweiten Basisstation (BS2) zu nutzen,
- **dadurch gekennzeichnet, dass** das System zumindest zwei Antennen auf dem Schiff (L) aufweist, wobei das System ausgebildet ist, um eine Übergabe durchzuführen, wenn ein Schwellensignal der zweiten Basisstation (BS2) stärker als das der ersten Basisstation (BS1) ist, wobei das System zum Unterhalten einer Mikrowellenfunkverbindung ausgebildet ist, um
- eine erste Antenne (A3) zur Signalgebung und/oder Datenübertragung zwischen dem Schiff (L) und der ersten Basisstation (BS1) zu verwenden, während eine zweite Antenne (A2) zu der zweiten Basisstation (BS2) umgelenkt ist; und
- eine zweite Antenne (A2) zur Signalgebung und/oder Datenübertragung zwischen dem Schiff (L) und der zweiten Basisstation (BS2) zu verwenden, während die erste Antenne (A3) zu der zweiten Basisstation (BS2) umgelenkt ist.

9. Telekommunikationssystem gemäß Anspruch 8, **dadurch gekennzeichnet, dass** es ausgebildet ist, um die Richtung für die Datenübertragung zwischen dem Telekommunikationsnetzwerk auf dem Schiff (L) und der Basisstation (BS1, BS2, BS3, BS4) mittels einer Ortsinformation der Basisstation, einer Ortsinformation des Schiffes und einer Information der Winkelposition des Schiffes zu bestimmen.

10. Telekommunikationssystem gemäß Anspruch 8 oder 9, **dadurch gekennzeichnet, dass** es ausgebildet ist, um die Ortsinformation des Schiffes von dem Globalen Positionsbestimmungssystem GPS zu empfangen.

11. Telekommunikationssystem gemäß Anspruch 8, 9 oder 10, **dadurch gekennzeichnet, dass** es ausgebildet ist, um die Richtung für die Datenübertragung mittels einer Gyroskop-Vorrichtung zu aktualisieren.

12. System gemäß einem der vorhergehenden Ansprüche 8 bis 10, **dadurch gekennzeichnet, dass** es ausgebildet ist, um für das Schiff (L) eine Breitfrequenzband-Datenverbindung zum Internet bereitzustellen, wobei die Breitfrequenzband-Datenverbindung eine Datenübertragungskapazität von mindestens 2 Mbit/s erlaubt.

13. Telekommunikationssystem, aufweisend eine erste Basisstation eines landgestützten Telekommunikationsnetzwerks (N), wobei die erste Basisstation angeordnet ist, um eine Mikrowellenfunkverbindung mit einem Telekommunikationsnetzwerk des Schiffes (L) aufzubauen, um dem Schiff (L) eine drahtlose Datenverbindung mit dem landgestützten Telekommunikationsnetzwerk (N) bereitzustellen,
- **dadurch gekennzeichnet, dass** die erste Basisstation (BS1) ausgebildet ist, um sich mit zumindest zwei Antennen auf dem Schiff (L) zu verbinden, wobei eine Übergabe durchgeführt wird, wenn ein Schwellensignal einer zweiten Basisstation (BS2) stärker als das der ersten Station (BS1) ist, wobei die erste Basisstation (BS1) zum Unterhalten einer Mikrowellenfunkverbindung ausgebildet ist, um eine erste Antenne (A3) der Antennen zur Signalgebung und/oder Datenübertragung zwischen dem Schiff (L) und der ersten Basisstation (BS1) zu verwenden, während eine zweite Antenne (A2) der Antennen zu der zweiten Basisstation (BS2) umgelenkt ist.

14. Basisstation gemäß Anspruch 13, **dadurch gekennzeichnet, dass** sie eingerichtet ist, um die Richtung für die Datenübertragung zwischen dem Schiff (L) und der ersten Basisstation (BS1, BS2, BS3, BS4) mittels einer Ortsinformation der ersten Basisstation und einer Ortsinformation des Schiffes (L) zu bestimmen.

15. Erste Basisstation gemäß Anspruch 13 oder 14, **dadurch gekennzeichnet, dass** sie eingerichtet ist, um die Ortsinformation des Schiffes (L) von dem Globalen Positionsbestimmungssystem GPS zu empfangen.

16. Erste Basisstation gemäß Anspruch 13, 14 oder 15, **dadurch gekennzeichnet, dass** sie eingerichtet ist, um
- eine auf die Mikrowellenfunkverbindung bezogene Schwellensignalstärke zu messen, wobei die Mikrowellenverbindung zwei Strahlen mit unterschiedlicher Polarisierung aufweist; und
- den Strahl mit der höchsten Schwellensignalstärke als den aktiven Strahl auszuwählen.

## Revendications

1. Procédé de fourniture d'un accès de navire (L) à des services de télécommunications terrestres d'un réseau de télécommunications terrestre (N), ledit réseau de télécommunications terrestre (N) comprenant au moins deux stations de base (BS1, BS2, BS3 , BS4), le procédé comprenant
- la fourniture dudit accès en utilisant une liaison radio hertzienne entre le navire (L) et une première station de base (BS1) ou une seconde station de base (BS2),
- **caractérisé par** l'utilisation d'au moins deux antennes sur le navire (L) pour maintenir une liaison radio hertzienne, dans lequel un transfert intercellulaire est effectué lorsqu'un signal de seuil de la seconde station de base (BS2) est plus fort que celui de la première station de base (BS1), dans lequel
- une première antenne (A3) est utilisée pour la signalisation et/ou la transmission de données entre le navire (L) et la première station de base (BS1) tandis qu'une seconde antenne (A2) est redirigée vers la seconde station de base (BS2) ; et
- une seconde antenne (A2) est utilisée pour la signalisation et/ou la transmission de données entre le navire (L) et la seconde station de base (BS2) tandis que la première antenne (A3) est redirigée vers la seconde station de base (BS2).

2. Procédé selon la revendication 1, **caractérisé par** la détermination de la direction de transmission de données entre le navire (L) et la station de base (BS1, BS2, BS3, BS4) au moyen d'informations de localisation de la station de base, d'informations de localisation du navire et d'informations sur la position angulaire du navire.

3. Procédé selon l'une des revendications 1 ou 2, **caractérisé par** la réception des informations de localisation du navire en provenance du système de localisation mondial GPS.

4. Procédé selon la revendication 1, 2 ou 3, **caractérisé en ce que** ladite liaison comprend deux faisceaux ayant des fréquences de mêmes amplitudes mais des polarisations différentes, avec l'un des faisceaux étant le faisceau actif qui est utilisé pour la signalisation et/ou la transmission de données.

5. Procédé selon l'une quelconque des revendications précédentes 1 à 4, **caractérisé par** la mise à jour sur le navire de la direction de transmission des données au moyen d'un dispositif gyroscopique.

6. Procédé selon l'une quelconque des revendications précédentes 1 à 5, **caractérisé par**
- la mesure d'une intensité de signal de seuil liée à la liaison radio hertzienne ; et
- la sélection comme faisceau actif du faisceau ayant la plus forte intensité de signal de seuil.

7. Procédé selon l'une quelconque des revendications précédentes 1 à 6, **caractérisé par** la recherche (2-3) sur le navire (L), si la force de signal de seuil de la première station de base (BS1) passe sous une valeur prédéterminée, pour un signal de la seconde station de base (BS2).

8. Système de télécommunication comprenant
- un réseau de télécommunications sur un navire (L), et
- un réseau de télécommunications terrestre (N) comprenant au moins deux stations de base (BS1, BS2, BS3, BS4) connectées au réseau de télécommunications terrestre (N),
- dans lequel le système est configuré pour utiliser une liaison radio hertzienne pour fournir une connexion sans fil de données entre le réseau de télécommunications sur le navire (L) et une première station de base (BS1) ou une seconde station de base (BS2),
- **caractérisé en ce que** le système comprend au moins deux antennes sur le navire (L), dans lequel le système est configuré pour effectuer un transfert lorsque un signal de seuil de la seconde station de base (BS2) est plus fort que celui de la première station de base (BS1), dans lequel, pour maintenir une liaison radio hertzienne, le système est configuré pour
- utiliser une première antenne (A3) pour la signalisation et/ou la transmission de données entre le navire (L) et la première station de base (BS1) tandis qu'une seconde antenne (A2) est redirigée vers la seconde station de base (BS2) ; et
- l'utilisation d'une seconde antenne (A2) pour la signalisation et/ou la transmission de données entre le navire (L) et la seconde station de base (BS2) tandis que la première antenne (A3) est redirigée vers la seconde station de base (BS2).

9. Système de télécommunication selon la revendication 8, **caractérisé en ce qu'**il est configuré pour déterminer la direction de transmission de données entre le réseau de télécommunications sur le navire (L) et la station de base (BS1, BS2, BS3, BS4) au moyen d'informations de localisation de la station de base, d'informations de localisation du navire et d'informations sur la position angulaire du navire.

10. Système de télécommunication selon la revendication 8 ou 9, **caractérisé en ce qu'**il est configuré pour recevoir les informations de localisation du navire à partir du système de localisation mondial GPS.

11. Système de télécommunication selon la revendication 8, 9 ou 10, **caractérisé en ce qu'**il est configuré pour mettre à jour la direction de transmission de données au moyen d'un dispositif gyroscopique.

12. Système selon l'une quelconque des revendications précédentes 8 à 10, **caractérisé en ce qu'**il est configuré pour fournir au navire (L) une connexion de données large bande de fréquences à Internet, la liaison de données large bande de fréquences permettant une capacité de transmission de données d'au moins 2Mbit/s.

13. Système de télécommunication comprenant une première station de base d'un réseau de télécommunication terrestre (N), dans lequel la première station de base est agencée pour établir une liaison radio hertzienne avec un réseau de télécommunication du navire (L) pour fournir au navire (L) une connexion de données sans fil au réseau de télécommunications terrestre (N),
- **caractérisé en ce que** la première station de base (BS1) est configurée pour se connecter avec au moins deux antennes sur le navire (L), dans lequel un transfert intercellulaire est effectué lorsqu'un signal de seuil de la seconde station de base (BS2) est plus fort que celui de la première station de base (BS1), dans lequel, pour maintenir une liaison radio hertzienne, la première station de base (BS1) est configurée pour utiliser une première antenne (A3) parmi lesdites antennes pour une signalisation et/ou de transmission de données entre le navire (L) et la première station de base (BS1) tandis qu'une seconde antenne (A2) parmi lesdites antennes est redirigée vers la seconde station de base (BS2).

14. Station de base selon la revendication 13, **caractérisée en ce qu'**elle est agencée pour déterminer la direction de transmission de données entre le navire (L) et la première station de base (BS1, BS2, BS3, BS4) au moyen d'informations de localisation de la première station de base et d'informations de localisation du navire (L).

15. Première station de base selon la revendication 13 ou 14, **caractérisée en ce qu'**elle est agencée pour recevoir les informations de localisation du navire (L) en provenance du système de localisation mondial GPS.

16. Première station de base selon la revendication 13, 14 ou 15, **caractérisée en ce qu'**elle est agencée pour
- mesurer une intensité de signal de seuil liée à la liaison radio hertzienne, la liaison hertzienne comprenant deux faisceaux de polarisations différentes ; et
- sélectionner comme faisceau actif le faisceau ayant la plus forte intensité de signal de seuil.
